Europäisches Patentamt

European Patent Office

Office européen des brevets

(11) Publication number: **0 051 647**
**B1**

(12) **EUROPEAN PATENT SPECIFICATION**

(45) Date of publication of patent specification: **12.09.84**

(51) Int. Cl.³: **A 01 G 31/02**

(21) Application number: **81901284.0**

(22) Date of filing: **15.05.81**

(86) International application number:
**PCT/SE81/00147**

(87) International publication number:
**WO 81/03257 26.11.81 Gazette 81/28**

(54) **INSTALLATION FOR CULTIVATING PLANTS IN A PROGRAMMED ENVIRONMENT.**

(30) Priority: **16.05.80 SE 8003685**

(43) Date of publication of application:
**19.05.82 Bulletin 82/20**

(45) Publication of the grant of the patent:
**12.09.84 Bulletin 84/37**

(84) Designated Contracting States:
**AT CH DE FR GB LI NL**

(56) References cited:
**AT-B- 335 788**
**CH-A- 531 302**
**DE-B-1 070 439**
**SE-A-78 075 124**

(73) Proprietor: **HORTOKONSULT AB**
**P.O. Box 16106**
**S-200 25 Malmö (SE)**

(72) Inventor: **NISSMO, Jim Arthur**
**Repslagarevägen 8**
**S-245 00 Staffanstorp (SE)**
Inventor: **SJÖSTEDT, Ernst Horst Severin**
**P.O. Box 4212**
**S-260 73 Östra Ljungby (SE)**

(74) Representative: **Ström, Tore et al**
**Ström & Gulliksson AB Studentgatan 1 P.O. Box 4188**
**S-203 13 Malmö (SE)**

Courier Press, Leamington Spa, England.

**Description**

The invention relates to an installation for cultivating plants in a programmed environment.

The principles for such cultivation have been well known for many years. In order that the cultivation may be independent of the soil and the topographical conditions at the cultivating site as well as the prevailing climate conditions, i.e. the access to hours of sunshine, suitable temperature, rainfall and air conditions, the cultivation takes place in a room which is closed in relation to the environment, wherein the plants receive their nourishment from a circulating nutrient solution, the air is conditioned with regard to temperature and humidity, and the necessary light is supplied only from artificial light sources. As a result, the cultivation conditions can be controlled in all respects to achieve optimum cultivation results.

Whereas the method is well developed with regard to creating favourable cultivation conditions, the handling of the plants in the cultivation room still constitutes a problem which has been considered to a minor extent only. For a rational handling, the plants must be rearranged from time to time in one and the same space as the growth continues, so that the individual plants will be able to grow freely and unhindered without interference from adjacent plants, and they must also be moved from one cultivation room to another so that the plants in a certain stage of growth will be given the most suitable environment which is not the same during the whole life of the plants.

The object of the invention is to provide a solution to this problem so that the handling of the plants in the programmed environment may take a place rationally, which is an important prerequisite in order that cultivation of plants in a programmed environment can be carried out at reasonable costs and thus can be competitive in comparison with conventional cultivation where light and air are taken from the environment and supplied to the plants in the condition which is determined by an often capricious nature.

The installation according to the invention comprises, in a known manner, channels for circulating nutrient solution in contact with the root system of the plants, each channel having an inlet and an outlet for nutrient solution at one end and the other, respectively, and openings to receive a root clump of porous material in the channel. An installation of this type is disclosed in AT—B—335 788.

In order to overcome the problem outlined above the installation of the persent invention has the characteristics according to the characterising part of claim 1.

In order to illustrate the invention an embodiment thereof will be described in more detail with reference to the accompanying drawings in which

FIG. 1 is an exploded perspective view of a channel with a cover,

FIG. 2 is a perspective view of a cultivation table for plants during an introductory period of growth,

FIG. 3 is a perspective view of part of the cultivation table in FIG. 2 together with a carriage for the transport of the channels and illustrates the transfer of the channels from the cultivation table to the carriage,

FIG. 4 is a fragmentary perspective view of cultivation tables for a later period of growth and illustrates the transfer of the channels from the carriage of FIG. 3 to such cultivation tables, and

FIG. 5 is a diagrammatic view of the air-conditioning system of the installation.

The individual plants are raised from seed in a special climate chamber, the seed being sown in a porous material, for example rockwool, which is kept saturated with nutrient solution. The plants are raised in a programmed milieu wherein light, temperature and humidity are maintained at optimum conditions. The plants with a substantially cube-shaped root block of rockwool are then "planted" in the installation according to the invention for the continued growth.

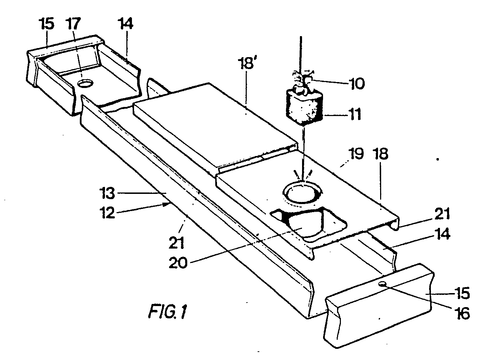

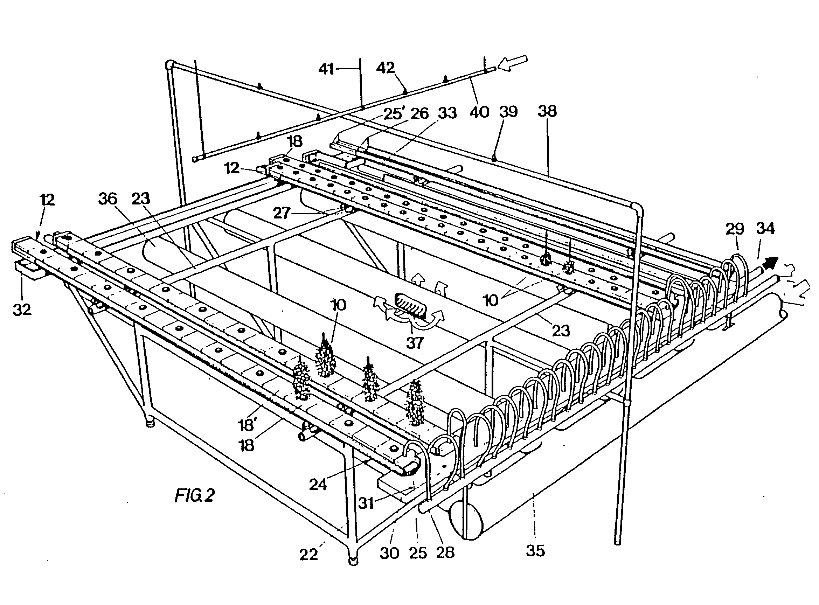

The part of the installation which is to receive the plants is shown in FIGS. 1 and 2, one plant 10 with a root block 11 being shown in FIG. 1. The basic element in the installation as a whole is constituted by a plurality of cultivation channels, one of which is shown in detail in FIG. 1 generally designated 12 therein. It comprises a channel-shaped element 13 with flared edge portions 14, and this channel-shaped element is provided with end walls 15 at both ends, these end walls being pushed like caps over the ends of the element 13. One end wall has a through hole 16 at the top, while such a hole is lacking in the other end wall, but close to this latter wall the bottom of the channel-shaped element 13 is formed with a through hole 17.

A cover 18 can be fitted to the channel-shaped element and has a central opening 19 which joins a socket 20 disposed at the lower side of the cover. The cover has edge flanges 21 at which it can be passed over the edge portions 14 and when thus fitted, the cover is displaceable in the longitudinal direction of the channel-shaped element 13 with the lower end of the socket situated close to the bottom of the element. The root block 11 of the plant 10 can be introduced through the opening 19 into the socket 20 when the plant is to be "planted" in the channel. A cover 18' which lacks opening 19 and socket 20, hereinafter called a blind cover, can also be fitted to the channel-shaped element 13. The blind cover is also formed with edge flanges 21 for fitting to the element 13.

The part of the installation according to the invention which is shown in FIG. 2 comprises a cultivation table which consists of a tubular stand 22. Two substantially horizontal tubes 23 are included in this tubular frame, which extend parallel to one another and which constitute rails to support mobile supporting frames 24 for the channels 12. Each such supporting frame consists of a square tube 25 which carries two angular rails 26 with such mutual spacing that a channel 12 as shown in FIG. 1 can be placed between the angular rails to be carried by the frame 24. At one end of the frame 24, the square tube 25 is replaced by two square tubes 25' which are mutually spaced and which are fixed one to each side of the square tube 25. The supporting frame 24 is carried by wheels 27 which are mounted at right angles to one another to run on the rail tubes 23. Thus, the supporting frames 24 can be displaced in the transverse direction of the channels in the stand 22.

In FIG. 2, channels 12 are mounted on supporting frames 24 located in the back portion of the stand 22, and are completely covered by covers 18 adapted to receive plants in the manner described previously, and a pair of plants 10 are also shown in position in FIG. 2. In the front portion of the stand 22, the plants 10 are larger after growth in an introductory period of growth, and in order that the plants may have more room, blind covers 18' have been placed between the covers 18 on the channels 12 which are carried by the supporting frames 24 in the front portion of the stand. Whereas the channels are shown close together in the back portion of the frame, they are arranged with mutual spacing in the transverse direction of the channels in the front portion, spacers can be disposed between the supporting frames 24 to determine this mutual spacing.

Disposed along one side of the stand 22, parallel to the tubes 23, there is a pipeline 28 for the supply of nutrient solution, and a number of hoses 29 extend from this pipeline. These hoses can be connected to the channels 12 carried by the supporting frames 24 on the stand 22, in the holes 16 for the supply of nutrient solution to the channels. For hoses 29 which for the time being are not connected to a channel 12 in this manner, there is an outlet conduit 30 with holes 31 to which these hoses can be connected to return the liquid which is supplied through the hoses.

At the opposite side of the stand 22, there is an open discharge channel 32 which likewise extends along the tube 23, and the channels 12 are placed with their holes 17 over this channel to discharge the nutrient solution which is supplied to the channel and flows therealong. As can easily be seen, the square tube 25 has been replaced by the two square tubes 25' at this end of the supporting frame 24 in order that there may be a free outlet for the liquid under the holes 17. The channel 32 is sufficiently wide to permit the channels to be displaced in relation to one another up to the length of one cover, without the hole 17 coming outside the channel as a result thereof, so that there is a possibility of adjusting the relative position of the plants in adjacent channels. The channel is connected to a discharge conduit 33 for the nutrient solution, and this conduit and the conduit 30 are connected to a common discharge conduit 34 for the nutrient solution.

The nutrient solution which is supplied through the conduit 28 and discharged through the conduit 34 can be circulated and adjusted with regard to the pH value and nutrient content in the manner described in US—A—4,245,433.

The stand 22 should be installed in a space for cultivating plants in a programmed milieu, the necessary light for the plants being obtained from electric light sources which are suspended above the frame but which are not shown here. In order to obtain suitable air conditions in the space, a main air conduit 35 is mounted along one side of the frame, where the conduits 28 and 30 are disposed, and from conduit 35 a plurality of branch air conduits 36 are branched off which extend transversly to the tubes 23, i.e. in the longitudinal direction of the supporting frames 24 and the channels 12 supported thereby. Air is supplied to the main conduit 35 at a suitable humidity and temperature in a manner which will be described in more detail further on, and this air is supplied to the space under the plants standing in the channels through a plurality of gill openings 37 at the lower side of the branch conduits 36. At the ceiling of the space there should be evacuation openings for the air supplied.

Extending over the stand 22 there is a water pipe 38 with sprinkler nozzles 39 for watering the foliage of the plants, which can take place periodically. This watering also takes place to encourage fertilization of flowers appearing on the plants, since the falling drops cause vibration of the flowers. A pipe 40 extends transversly of the pipe 38 and can be suspended from the ceiling by means of cables 41. Nozzles 42 are provided on pipe 38 to spray a fine mist into the space to humidify the air.

In the part of the installation which is shown in FIG. 2 and which has now been described, the plants which are taken out of the climate chamber spend their introductory growth period, and from the beginning they are very close together as shown in the back portion of the stand but later on can be advanced to the front portion of the stand to be placed more spaced apart there, as shown, and the "thinning out" of the plants brought about in this manner can be obtained as a result of the fact that blind covers 18' are placed between the covers 18 in which the plants stand, and that more or less spacing is provided between the channels.

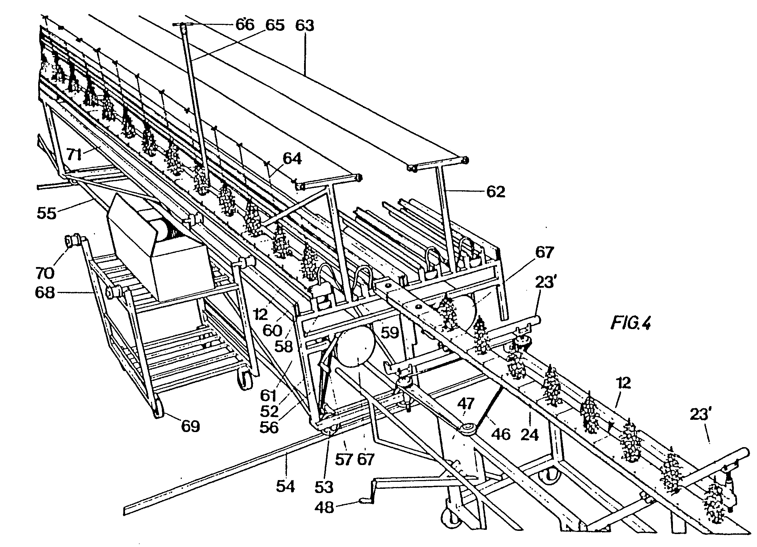

When the plants have reached a certain size in the front portion of the stand 22, they must be moved to another part of the installation according to the invention, which is shown in FIG. 4, and this can be effected in a rational manner in the installation according to the invention by using a carriage which is shown in

## FIG. 3.

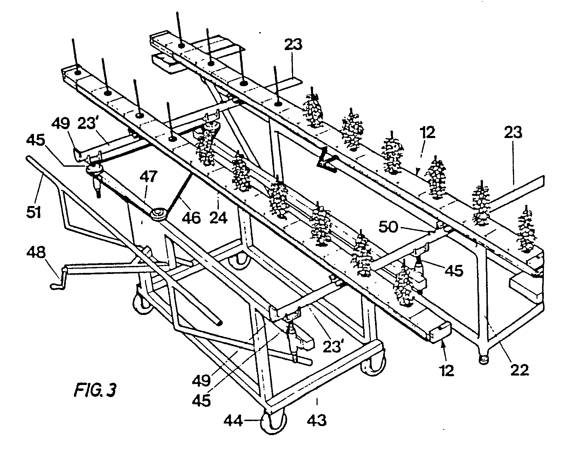

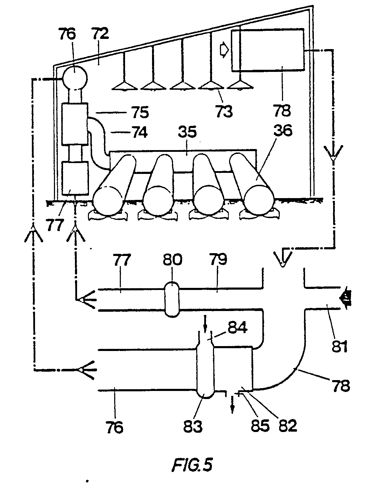

The carriage shown in FIG. 3 comprises a chassis 43 which is supported by castors 44, and this chassis includes two tubes 23' of the same art as the tubes 23 and disposed at the same mutual spacing as these. One tube is supported by supports 45 which can be adjusted to various heights by means of screws, the supports being so adjusted that the tube 23' which is supported thereby can be connected to one tube 23 in the stand 22, when the carriage is driven close to this frame, as shown in FIG. 3. The other tube 23' on the carriage is also supported by such a support 45, but in this case the support is coupled by means of a chain transmission 46 through a gear 47 to a hand crank 48 so that this support can easily be adjusted to such position that the tube 23' carried thereby can be connected to the tube 23 in the stand 22 when the carriage is moved in close to the stand.

With the carriage moved in close to the stand 22 and with the tubes 23' connected to the tubes 23 so that they form extensions of these, the supporting frame 24 can be rolled on the rails formed by tubes from the stand 22 onto the carriage to be supported by this. Stops 49 are provided on the tubes 23' to prevent the supporting frame from rolling off the carriage at one end of the tube 23' which is opposite to the end connected to the tube 23, which latter end is provided with resilient stop members 50 which permit movement of the supporting frame 24 on the tubes 23 but prevent its movement off this tube.

After a plurality of supporting frames 24 with channels 12 carried thereby and plants 10 standing in the channels have been transferred to the carriage in the manner illustrated in FIG. 3 and described above, the carriage is moved to the part of the installation which is shown in FIG. 4 and in order to facilitate the moving of the carriage, this is provided with a handle 51.

The part of the installation which is shown in FIG. 4 comprises a plurality of stands 52 which are supported by wheels which run on rails 54 in the space where this part of the installation is installed. This space is also adapted for cultivation in a programmed milieu and has the devices which are required for this. In order to displace the stand along the rails 54, one pair of wheels 53 which are mounted on a common shaft 55, are coupled by means of a chain transmission 56 to a hand crank 57 so that these wheels can be rotated.

Supported in the stand 52 there are fixed angular rails 58 which are disposed in pairs with such mutual spacing that a channel 12 can be pushed in between them to be supported by the rails. As shown in FIG. 4, the channels 12 are introduced on the carriage from one end of the guides 58 by being pushed in their longitudinal direction from the supporting frames 24 on the carriage onto the rails 58, and the reason why one tube 23' is easily adjustable by means of the hand crank 48 via the transmissions 46 and 47 is to make possible that the end of the channels is brought to the exact height for pushing onto the rails 58. FIG. 4 shows a channel just when it is to be pushed off the carriage onto the rails 58 and another channel which is already in the stand 52, supported by the rails 58. The stand 52 may have a length which is considerably greater than the length of the channel 12, so that a plurality of channels can be arranged in a row in the stand.

Extending along the rails 58 there is a pipeline 59 which is connected by means of flexible pipes to the system for circulating nutrient solution so that such solution may be supplied to this pipeline. Extending from the pipeline 59 there are a plurality of hoses 60 of the same type as the hoses 29 in FIG. 2, and by means of these, the line 59 can be connected to the holes 16 in the channels for the supply of nutrient solution. Disposed under the channels standing in the stand 52, there are discharge channels in the form of open troughs 61 which are located in the stand 52 under the channels 12 and are connected by means of flexible pipes (not shown) to an outlet for the nutrient solution. The nutrient solution which is supplied to the channels 12 flows along the channels and then leaves through the holes 17 to flow directly into the trough 61 and then returns to the system for circulating nutrient solution. When the hoses 60 are not used, they can simply be laid with their outlets in the trough 61.

The plants are intended to spend the latter part of their period of growth in the stand 52 and during this period of growth they may need tying up. For this purpose, uprights 62 are disposed on the stand with wires 63 supported thereby, to which individual vertical supporting wires 64 for the plants can be tied or hooked.

In order to water the foliage of the plants and to promote the fertilization of the flowers of the plants, one or more vertically projecting pipelines 65 are disposed on the stand with sprinkler nozzles 66 at the upper end, and for the supply of air an air conduit 67 is disposed along the frame under the rails 58 and the channels supported thereby. The air conduit has gill openings at its lower side in the same manner as the branch air conduits 36 in FIG. 2. Hose connections are associated with the pipelines 65 and with the air conduit 67 from stationary connections in the space to permit the movement of the stand 52 on the rails 54.

The installation described is designed in particular for the cultivation of tomato plants and the advantage of the stand 52 being adapted to move in its transverse direction is that two stands located one beside the other can be separated to create a passage between the stands along which it is possible to walk to pick tomatoes from the plants. The fact that the stands can normally stand close beside one another naturally involves a considerable saving of space.

FIG. 4 shows an aid to picking, namely a carriage 68 which can be moved on the floor with castors 69 but also has rollers 70 at which the carriage can be supported on square tubes 71 which form longitudinal supporting elements in the stand 52. When the carriage runs on the tubes 71, it has the castors 69 lifted up somewhat from the floor. Suitable picking vessels or packing boxes can easily be caried on the carriage 68, since the picking takes place along the rows of plants growing in the stand.

The system for circulating nutrient solution will not be described in more detail here, because it is fully described in the abovementioned patent specification, and the connection of the pipes and channels through which the nutrient solution is circulated in the installation according to the invention should be easily understood with reference to the description above. On the other hand, the system for circulating air will be discussed in more detail.

In the diagrammatic FIG. 5, a space 72 for programmed cultivation is shown and in this space the main air conduit 35 is shown together with the branch air conduit 36 connected thereto. The space is thus intended for the part of the installation which is shown in FIG. 2, but the stand 22 and other parts of the installation connected thereto are not shown. Light sources 73 for the artificial lighting of the plants are suspended from the ceiling. The conduit 35 is connected, by means of a connection conduit 74, to a distribution and mixing chamber 75 which is supplied, on the one hand with heated air through a conduit 76 and on the other hand with cold air through a conduit 77. The same arrangement may, of course, be used for the connection of the air conduit 67 in FIG. 4 and the conduit 74 may appropriately be a flexible pipe both with regard to conduit 35 and with regard to the conduit 67. At the ceiling of the space 72 there is disposed a conduit 78 with openings to evacuate air from the space, and since this evacuation takes place at the ceiling it is comparatively warm air which is evacuated, since the waste heat from the light sources causes the heating of the air in the space. As a rule, no other heating is needed if the space is well insulated.

Branched off from the conduit 78 there is a conduit 79 with a fan 80 for the supply of warm or at least slightly warm air to the conduit 77, and the conduit 78 also has an inlet 81 to take in fresh air from the outside. The conduit 78 is connected to a cooling-coil battery 82. Also a fan 83 is connected to this battery to suck out air through the conduit 78 and to supply the air which has passed through the cooling-coil battery, under pressure, to the conduit 76. At the fans, carbon dioxide can be introduced at 84, since the photosynthesis in the leaves of the plants requires this, and by suitable mixing of cool and warm air, carbon dioxide and fresh air the most favourable conditions for the plants can be created in the space 72 with regard to temperature and air composition. The humidification of the air takes place, as described previously, by the supply of water through sprinklers and mist nozzles.

The water condenses in the cooling-coil battery 82 and this can be utilized for use in the nutrient solution as indicated at 85.

As can be seen from the embodiment of the invention described, this provides that an extremely rational handling of the plants can take place during the various periods of growth and with the possibility of maintaining the most favourable cultivation conditions for the plants in each stage of growth. After a plant has been placed in a cover 18 and installed in the channel 12, it can easily be moved in the manner required so that it may be given the space it needs in a certain stage of growth. It can also easily be handled when it is to be moved from one cultivation space with conditions for a certain stage of growth to another cultivation space with conditions for another stage of growth. Only as a result of the possibilities thus provided for rational handling of the plants in the programmed milieu such cultivation becomes economically advantageous in comparison with conventional cultivation in a greenhouse.

It would be obvious that the installation described can be modified with regard to constructional details within the scope of the invention as this is defined in the accompanying claims.

**Claims**

1. An installation for cultivating plants in a programmed environment, comprising channels (12) for circulating nutrient solution in contact with the root system of the plants, each channel (12) having an inlet (29, 60) and an outlet (32, 61) for nutrient solution at one end and the other, respectively, and openings (19) to receive a root clump (11) of porous material in the channel (12), characterised in that each channel (12) is provided with removable covers (18) which are displaceable in the longitudinal direction of the channel (12) and are provided with said openings (19) and that the channels (12) are arranged side-by-side and are received for displacement along the respective longitudinal axis of the channel (12) by a supporting frame (24, 52) which is displaceable in a direction transverse to the channels (12).

2. An installation as claimed in claim 1, characterised in that the opening (19) joins a socket (20) projecing from the under side of the cover (18).

3. An installation as claimed in claim 1 or 2, characterised in that each channel (12) is provided with a plurality of covers (18) provided with openings (19) alternated with covers (18') without openings (19).

4. installation as claimed in one of the claims 1 to 3, characterised in that the supporting frame (24) is mounted for movement in the direction transverse to the channels in a stationary stand (22).

5. An installation as claimed in one of the claims 1 to 3, characterised in that the supporting frame is arranged as a stand (52) which can be moved in the direction transverse to the channels (12).

6. An installation as claimed in claim 4 or 5, characterised in that disposed in the stand (22, 52) under the channels (12) there are conduits (36, 67) extending in the longitudinal direction of the channels (12) for the supply of air.

7. An installation as claimed in claim 6, characterised in that the conduits (36, 67) for the supply of air are provided with outlets (37) at their lower sides.

## Revendications

1. Installation permettant la culture de plantes dans un environnement programmé, comprenant des canaux (12) pour la circulation de solution nutritive en contact avec le système radiculaire des plantes, chaque canal (12) ayant un orifice d'entrée (29, 60) et un orifice de sortie (32, 61) pour la solution nutritive, respectivement à l'une et à l'autre de ses extrémités, et des ouvertures (19) permettant la réception d'un block radiculaire (11) en une matière poreuse dans le canal (12), caractérisée en ce que chaque canal (12) est muni de couvercles amovibles (18), déplaçables dans la direction longitudinale du canal (12) et présentant les dites ouvertures (19), et en ce que les canaux (12) sont disposés les uns à côté des autres et sont supportés, de manière à pouvoir se déplacer le long de leurs axes longitudinaux respectifs, par une structure porteuse (24, 52) qui est déplaçable dans une direction transversale par rapport aux canaux )12).

2. Installation selon la revendication 1, caractérisée en ce que l'ouverture (19) rejoint une douille (20) qui fait saillie à partir du côté inférieur du couvercle (18).

3. Installation selon le revendication 1 ou 2, caractérisée en ce que chaque canal (12) est muni d'une pluralité de couvercles (18), présentant des ouvertures (19), en alternance avec des couvercles (18') sans ouvertures (19).

4. Installation selon l'une des revendications 1 à 3, caractérisée en ce que la structure porteuse (24) est montée de manière à pouvoir se déplacer, dans la direction transversale par rapport aux canaux, dans un support fixe (22).

5. Installation selon l'une des revendications 1 à 3, caractérisée en ce que la structure porteuse est agencée sous la forme d'un support (52) qui peut être déplacé dans la direction transversale par rapport aux canaux (12).

6. Installation selon la revendication 4 ou 5, caractérisée en ce que des conduits (36, 67), s'étendant dans la direction longitudinale par rapport aux canaux (12), sont disposés dans le support (22, 52), sous les canaux (12), pour permettre l'alimentation en air.

7. Installation selon la revendication 6, caractérisée en ce que les conduits (36, 67) d'alimentation en air sont munis d'orifices de sortie (37) à leurs côtés inférieurs.

## Patentansprüche

1. Vorrichtung zum Kultivieren von Pflanzen in einer programmierten Umwelt, bestehend aus Zirkulationskanälen (12) für eine mit dem Wurzelsystem der Pflanzen in Berührung stehende Nährlösung, wobei jeder Kanal (12) einen Einlaß (29, 60) sowie einen Auslaß (32, 61) für die Nährlösung am einen bzw. anderen Ende und Öffnungen (19) zur Aufnahme eines Wurzelballens (11) aus porösem Material im Kanal (12) aufweist, dadurch gekennzeichnet, daß jeder Kanal (12) mit abnehmbaren Abdeckungen (18) versehen ist, die in Längsrichtung des Kanals (12) verschiebbar und mit den Öffnungen (19) versehen sind, und daß die Kanäle (12) nebeneinander angeordnet sowie zum Verschieben entlang der jeweiligen Längsachse des Kanales (12) von einem Tragrahmen (24, 52) aufgenommen sind, der in einer quer zu den Kanälen (12) verlaufenden Richtung verschiebbar ist.

2. Vorrichtung nach Anspruch 1, dadurch gekennzeichnet, daß die Öffnung (19) über einer Dose (20) liegt, die von der Unterseite der Abdeckung (18) absteht.

3. Vorrichtung nach Anspruch 1 oder 2, dadurch gekennzeichnet, daß jeder Kanal (12) mit mehreren mit Öffnungen (19) versehenen Abdeckungen (18) versehen ist, die mit Abdeckungen (18') ohne Öffnungen (19) abwechseln.

4. Vorrichtung nach den Ansprüchen 1 bis 3, dadurch gekennzeichnet, daß der Tragrahmen (24) in einem ortsfesten Gestell (22) in der quer zu den Kanälen verlaufenden Richtung beweglich angebracht ist.

5. Vorrichtung nach den Ansprüche 1 bis 3, dadurch gekennzeichnet, daß der Tragrahmen als Gestell (52) ausgebildet ist, das in der quer zu den Kanälen (12) verlaufenden Richtung bewegbar ist.

6. Vorrichtung nach Anspruch 4 oder 5, dadurch gekennzeichnet, daß unter den Kanälen (12) im Gestell (22, 52) in Längsrichtung der Kanäle (12) verlaufende Leitungen (36, 67) zur Luftzufuhr vorgesehen sind.

7. Vorrichtung nach anspruch 6, dadurch gekennzeichnet, daß die Leitungen (36, 67) zur Luftzufuhr an ihren Unterseiten mit Auslässen (37) versehen sind.

FIG. 1

1

FIG.2

FIG. 3

*FIG. 5*

FIG.4

0 051 647